# EUROPEAN PATENT SPECIFICATION

(11) **EP 1 677 591 B1**
(45) Date of publication and mention of the grant of the patent: **06.01.2016**
(21) Application number: 03754327.9
(22) Date of filing: 10.10.2003
(51) Int. Cl.: A01K 29/00, G01G 17/08, G01B 11/00, A22B 5/00

(54) **METHOD AND DEVICE FOR THE MONITORING OF PIGS**
VERFAHREN UND VORRICHTUNG ZUR ÜBERWACHUNG VON SCHWEINEN
PROCÉDÉ ET DISPOSITIF DE SURVEILLANCE DE COCHONS

(43) Date of publication of application: 12.07.2006
(73) Proprietor: AB Svenska Mätanalys, 591 50 Motala (SE)
(72) Inventor: EKE-GORANSSON, Per, S-592 92 Vadstena (SE); ANDERSSON, Mikael, S-591 50 Motala (SE); RYDBERG, Anna, S-757 56 Uppsala (SE)
(74) Representative: Berglund, Erik Wilhelm
(86) International application number: PCT/SE2003/001588
(87) International publication number: WO 2005/034618

(56) References cited:
- EP-A2- 1 396 188
- DE-A1- 19 918 100
- DE-U1- 20 108 944
- US-A- 5 412 420
- US-A- 5 579 719
- US-B1- 6 318 289
- US-B1- 6 539 896
- DATABASE WPI Week 200267, Derwent Publications Ltd., London, GB; Class S02, AN 2002-624635, XP002342185 & KR 2002 024 688 A (LEE D W) 01 April 2002

## Description

In later years a number of different suggestions have been made concerning how to estimate the weight of growing pigs by means of cameras. Focus has essentially been on optimizing the time for sending the pigs to the food processing industry based on the momentarily present demands from this. However no reasonably prized system that can provide this weight monitoring has come on the market.

One object of the invention is therefor to provide a system that allows a monitoring of pig weight that is accurate and reasonable in price.

The above object is achieved in accordance with the invention with an image based measuring device and a method for the estimation of the condition of pigs, at which the pig weight is estimated by processing a camera (1) image from above of a pig, the pigs are identified at the time of their images being taken by the camera (1) and that two illuminating devices or lamps (2) are located on each side of the camera, spaced apart a width generally corresponding to the width of pigs, and that the image processing includes edge detection used to calculate the contour of the pig, longitudinal and/or transverse light lines are projected on the back of the pig that is to be weighed and a corresponding image is taken by the camera and used to establish the horizontal contour of the pig or a part thereof, only where the edge detection is uncertain or impossible, and that an image of longitudinal and/or transverse light lines is taken by the camera and used to establish the roundness of the pigs back, which in turn is used as a measure of how fat the pig is.

The identification is individual so that each pig is identified when pictured. Alternatively it may in some instances be sufficient to identify each box of pigs so that a mean pig weight for each box can be obtained. Since today normally for practical reasons all the pigs in a box are shipped at the same time it will, for deciding on the shipping time for each box, be sufficient to monitor the mean pig weight of each box.

By identifying each pig it is no longer necessary to take an image of each pig each time, it is sufficient that a maj or number of the pigs can be pictured every now and then to provide a growth curve or a mean pig weight for each box.

The camera preferably travels along rails above the eating positions of the pigs carried in carriage. The camera may instead be arranged on a trolley on the floor or in a hand-held equipment or in a similar way.

Identification can be by means of identification chips in the neck or tail or elsewhere on the pig, which chips can be identified by a corresponding sensor with a sensitivity loop focusing on the same pig as the camera or extending down from the camera carriage. This means that a pig that could not be measured is identified and hopefully it is possible to get a useful image the next time. The next time may be a return travel of the carriage returning to a docking station in one end of a supporting rail, and this time the camera need not necessarily take images of all pigs but only of those that where missed or badly pictured before.

One attempt to achieve such a system is described in DE199 18 100 A1. This publication concerns a contact free weight registration of living animals, in particular pigs in the surrounding where they ar kept. At the described method and device a video camera is used to take a digital picture from which by digital processing a weight value is obtained by prossing in microcomputor. The camera hangs in a universal joint. A distance censor is used to scale the pictures and a light indicator is used to allow a manual positioning of the camera.

The above object is in accordance with by the pigs being identified at the time of their images being taken by a camera and that two illuminating devices or lamps are located on each side of the camera, spaced apart a width generally corresponding to the width of the pigs.

The carriage drive may be continuous or the carriage may actually stop at each pig, for instance when the identification signal is as strongest. The stopping for each pig of course has the advantage that the camera can try several times to get a good image. The continuous drive on the other hand has the advantage that it may be possible to take images of all pigs in the stable in one run. Of course the two drive modes may be used alternatively.

Some pigs will never provide a good weight estimation enabling image, for instance black or spotted pigs are bound to be difficult, preferably the original images of these pigs are now and again displayed for the control person to keep a human eye on those pigs.

By identifying the pigs it will also be possible to monitor these individually in their growing and to store a growth chart for each pig. By the improved weighing and monitoring of the pigs it will be possible to determine the present growth rate and to feed the pigs (in each box) in proportion thereto saving a lot of pig food without loss of weight or growth.

Furthermore it should perhaps also be noted that the there is more to pigs than sending them at the right time to the butcher. Also a reduction of the mortality can save a lot of money for the pig farmer. Since this also will reduce the suffering of sick pigs the life quality of these will be improved, which ought to be applauded by pig activists.

The identification of the pigs that stand at the feed through when the carriage passes with its camera does not only allow the designation of each image to the right pig but also of course provides the information of if all pigs are eating or if someone is missing. If a pig is not eating it is a strong indication that something is wrong. A pig may however be missing at the feed through for other reasons than that it is ill, there may not be space enough or it may actually have had the time to eat before the carriage arrives, a repeated absence should however be checked.

In order to improve the health monitoring the carriage may also be provided with means for sensing the temperature of each pig in order to register this enabling an early diagnose and possible administration of antibiotics. In a preferred embodiment each pig may be provided with an identification chip, including a thermometer device the reading of which can be transmitted to the camera or monitoring unit when this is passing and recording.

In addition to the growth chart, for each pig may also be noted if it has been sick, has received antibiotic etc. By also noting if several pigs turn ill at the same time bad food can be spotted far quicker than otherwise as well as other deceases. By recording of these and maybe other regularly and essentially automatically retrieved information each pig may become so to say certified and also a feedback from the inspecting veterinaries at the butcheries may be obtained. Also the health records of the pigs can indicate problem pigs for the veterinary at the butcheries.

In order to obtain the weight of the pig in question its contour is acquired from the picture by an edge detector the head being replaced by a part circular contour and the area within the contour that is proportional to the weight is calculated.

Images of pigs that are entirely black or spotted are difficult to segment, and in particular it will be difficult to estimate the correct contour of the pig. In order to eliminate this problem as well as other contour problems experienced with the above edge detection, a laser device or other illuminating device can be used that projects lines across and/or along the back of the pigs. The lines situated on the back of pigs will appear slightly curved in the image and will either vanish at the edge of the pig or change direction at the transition to the next pig. The location of these angles or twists of the lines can be obtained from a corresponding image taken by the same camera as the image for the edge detection. Preferably those two images are taken almost simultaneously. The location of these twists in the lines will provide information that can be used as a complement to the above described detection based on the taken image. For instance the edge indication obtained from the laser lines may be used where the other image has small or smooth changes in contrast and thus a poorly defined pig contour. Also this line based retrieval of information requires less data power. Since the edge-detection based establishing of the contour is continuous and not only constituted by a few single points it will however provide a more accurate measuring where it can be used and it is also necessary for the "head removal". By appropriately selecting edge-detector or line based processing the necessary data power can be reduced and the precision in the final results is greatly improved.

Advantageously the laser lines are projected crosswise as well as lengthwise of the pig and the number of lines may be 15 in each direction. The laser may be monochromatic and a corresponding filter may be applied intermittently in front of the camera optics. Furthermore the lasers may be green. Since the pigs basically are pink with possible black spots (or dirt) in the green light the difference in reflection from pink or black will be small and it will be easier for the computer to find the contour of the pigs.

The laser lines crosswise of the pig also have the advantage that a measure of the curvature of the back of the pig can be obtained and this in turn may serve as an indication of if the pig in question turn the food into fat or meat. If the pig is getting fatter the amount and mixture of the food may be altered to keep the pigs from becoming too fat. Since the production of fat is more energy consuming than meat production and payment for fat pigs is reduced, a timely monitoring and food adaptation will result in considerable savings. Pigs that tend to become too fat may even at an early stage be slaughtered since they are uneconomic. Also here the invented monitoring of the pigs is a great improvement.

Further advantages and characteristics of the invention are apparent from the subclaims as well as the following description of a preferred embodiment and its use with reference to the enclosed drawing and pictures.

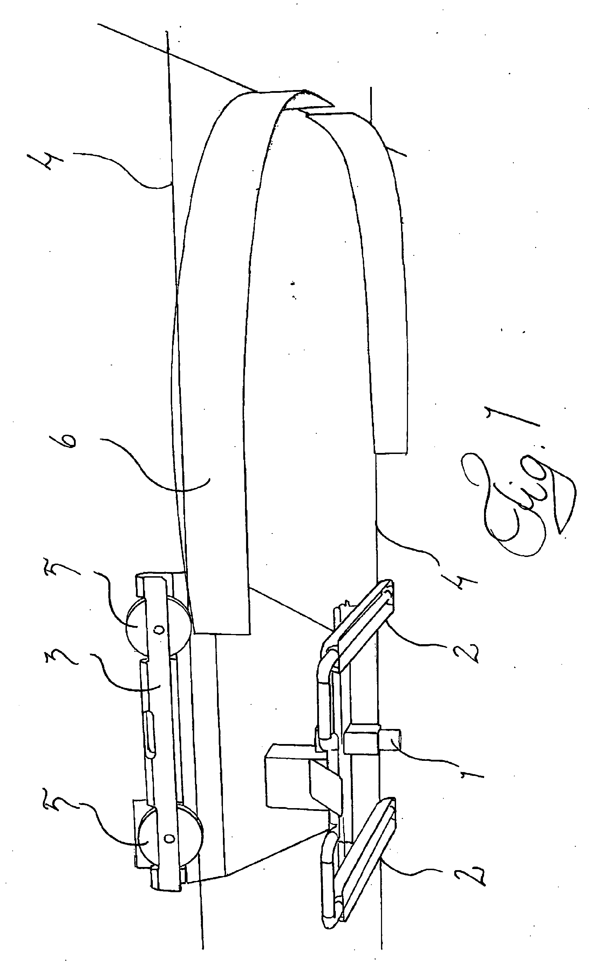

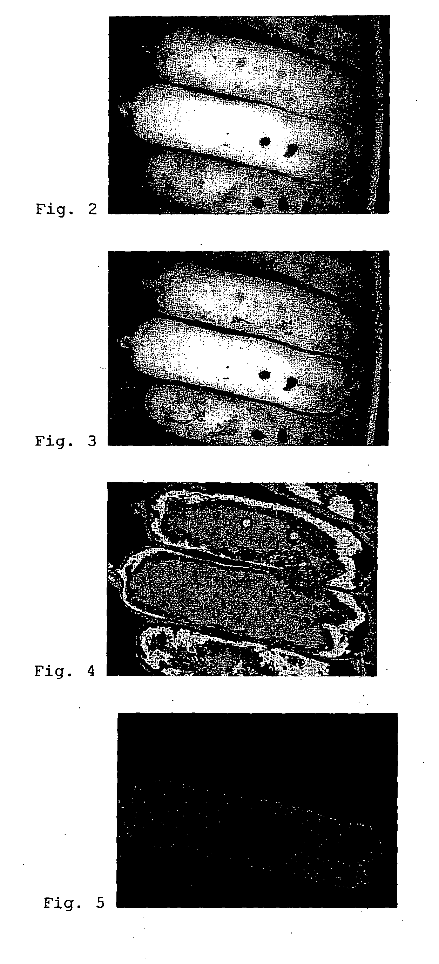

In the enclosed drawings fig 1 depicts a pig monitoring installation and fig 2 - 8 are images corresponding to different steps in an edge detection based image processing that in the end provides a weight value for the pig in question.

The embodiment of the invented pig monitoring device shown in fig. 1 comprise a centrally mounted camera 1 and two illumination devices or lamps 2 located on each side of the camera spaced apart a width generally corresponding to the width of the pigs. Camera and lamps are mounted in a carriage 3 that on pulleys 5 can travel along a wire 4 mounted along the roof of a pig stable. The wire is arranged essentially centrally over the position of the pigs when they are fed standing side by side. In one end (not shown) of the wire a docking station is arranged for battery charging and protection of the camera when not in use. The carriage is further provided with a transmitter for the transfer of the images to a stationary computer, an identification sensor and a laser projector for the projecting of lateral and lengthwise lines over the back of the pig that is evaluated. A broad strip of panel 6 is used to bridge corners between crossing wires, the panels lifting the pulleys over the wires. The wires are easy to mount and the carriage can easily be lifted down and transferred to another pig stable for a checking and weighing of the pigs there. In order to allow an easy passing of roof supporting columns and the like the lamps or an entire substructure of the carriage including camera, laser projector or identification sensor may be pivotable around a horizontal, lengthwise directed pivot axis from the horizontal work position to a vertical column or wall passing position.

Furthermore means measuring the distance between the pig back and the camera may be employed to secure uniform measuring. If the carriage has a tendency to swing laterally this may be eliminated in the camera or the device may wait with the image taking till the swing movement is sufficiently small. A swing sensor may be used to this end.

The corners of the wire are connected via panels that are somewhat higher than the wire and curved so that the wheels of the carriage can be slightly lifted and pass over to the next wire easily.

When pig monitoring and evaluation is to take place the camera travels along the rail and takes at least one image of each eating pig from above, either while traveling or stopping for each pig. Each pig image is by radio transferred to a stationary computer where it is analyzed, either directly or at a later stage. Image data may alternatively be stored in a memory in the carriage and then transferred to the computer when docking. A preliminary treatment of the image data may alternatively be carried out on board the camera carriage in order to reduce the need of local memory and data transfer volume.

Furthermore the pigs are identified by a sensor that cooperate with identification chips injected into the necks or tails of the pigs, so that each image can be related to the corresponding pig.

Immediately after image acquisition, or after image transfer and possible temporary storage, the image is processed and evaluated. Basically the contour of the pig (-s) is extracted and the area enclosed by the contour is calculated.

Images that are believed not to be representative in the automatic evaluation may for instance be those where the crosswise measure is less than, or bigger than, values measured before indicating that a part of the pig is missing or that the contour is influenced by a neighboring hard pushing pig. This situation can for instance be detected by considering width values or by comparing the area with a contour envelop. If the relation between the two areas is below or above defined threshold values the calculated contour is probably wrong and the image is either discarded or the contour area replaced by that of the envelop.

If some particular pig is repeatedly impossible to monitor or evaluate, its image may be displayed to the person in charge.

Alternatively, the image or ID of suspected pigs may be loaded into the memory of a handheld identification scanner for a later manual check round of the person in charge. The device may be provided with means for noting that indicated pigs missed by the camera have been checked as well as keys for entering notes regarding the status of these "manually checked pigs" that on docking of the device is fed into the computer.

Also the pig temperature is sensed for each pig, this giving an early indication of if something is wrong with the pig in question. Here it may be noted that the pig temperature as well as other possible parameters may be registered even if the weight is not possible to estimate.

Some pigs are very difficult to acquire good images of, for instance pigs that are black or that have great black patches. Provided that the percentage of such pigs is not too large the other pigs in the same box will provide information as to how fast they grow, if they should have more or less food etc, this in particular since the pigs are not fed individually but on a box-wise base.

Description of the data processing of images with reference to images shown in fig 2 - 8:

### Step I

1. An image of a pig is obtained. (fig 2)
2. An edge detector is used to extract continuous edge information from the image. Only strong connected edges are saved for further processing.
3. The results from 2) are combined with an intensity image so that edge pixels from 2) is set to zero in the intensity image. This in order to enable for the processing in steps II. (fig 3)

### Step II

4. Multiple threshold or classifying by clustering of the intensity image is used for splitting the image into n different classes, taking the results from step I into account. (Fig 4)
5. Automatically selected classes are used as very strong candidates for possible pigs, but the remaining classes are saved for further processing later on. Unites touching the border of the image are removed in order to avoid treating pigs that are not entirely shown in the image.
6. The most central pig in the image is selected for further processing.

### Step III

7. The potential center pig is compared with regions from the remaining classes and regions fulfilling certain criteria are added to the potential center pig in order to find the complete pig.
8. The image result from step III is the separated pig (Fig 5).

### Step IV

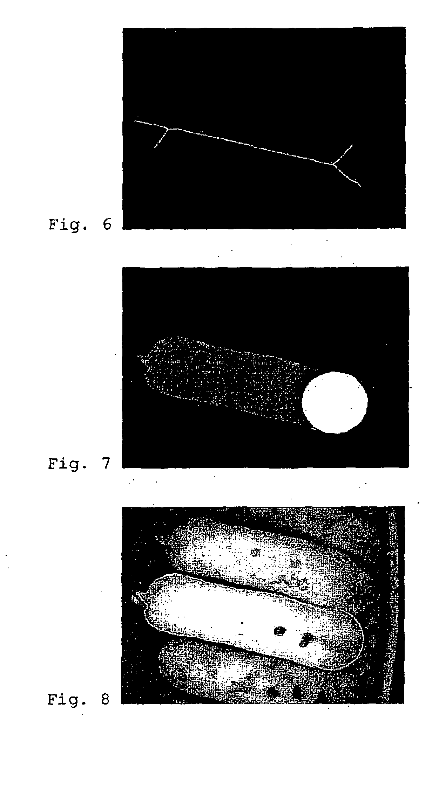

9. In this step the head of the pig is separated from the rest of the body. This to make sure that the position of the pigs ears for instance, which have a great influence of the total area of the pig, does not influence the expected value
10. Different shape parameters are used to control that the shape of the segmented pig does not deviate too much from that of a normal pig, for instance by calculating the convex hull for the segmented pig and compare it with the area of the segment itself.
11. A test to see weather the head is visual in the image or not is made before the head is to be removed. If the head is present it is removed by making a cut after the largest circle that can be placed at the pig shoulder. The location of the center of the circle is decided by the branching point of the skeleton of the image segment.
12. If the head is not present, the image skeleton is calculated from the convex hull. This in order to compensate for the cases where the shoulder is somewhat in the shadow and receives a concave recess that negatively influence the skeleton calculation. The circle is then used on the segment providing a nice defining of the front contour of the pig's shoulder (Fig. 6 & 7).
13. The area as well as length and width measures in pixels are now calculated for the pig body and saved in a corresponding file (Fig 8).

To a certain extent the system may be self-learning by a weight feedback from the butcheries.

The invention constitutes a great step forward in the keeping of pigs and should improve growth rate and food efficiency and improve health conditions for the pigs.

The invention also allows the calculation of projected sending time.

The individual identification of each pig may be used as base for automatic sorting of the pigs at separating gates provided with means sensitive to the signals from the identification chips.

The invention provides a versatile and adaptable tool improving the care of the pigs as well as savings in food and a well timed shipping of the pigs.

The carriage carrying the identification and temperature receiver can be provided with two receiver antennas, one for identification of the pig located below the camera and one with a broader reception area in particular so that the temperature of each pig in the box can be monitored even if it is not eating or being photographed. This temperature monitoring only may be carried out during a return run or indeed a special temperature run. Simultaneous identifying is of course a good thing but even if only temperature signals are obtained they can, at an early stage, indicate if a pig is sick.

## Claims

1. Method for the estimation of the condition of pigs, at which the pig weight is estimated by processing a camera (1) image from above of a pig **characterized in that** the pigs are identified at the time of their images being taken by the camera (1) and that two illuminating devices or lamps (2) are located on each side of the camera, spaced apart a width generally corresponding to the width of pigs, and that the image processing includes edge detection used to calculate the contour of the pig, longitudinal and/or transverse light lines are projected on the back of the pig that is to be weighed and a corresponding image is taken by the camera and used to establish the horizontal contour of the pig or a part thereof, only where the edge detection is uncertain or impossible, and that an image of longitudinal and/or transverse light lines is taken by the camera and used to establish the roundness of the pigs back, which in turn is used as a measure of how fat the pig is.

2. Method according to claim 1, **characterized in that** camera (1) and illumination devices or lamps (2) and laser device or other illuminating device to project lines across and/or along the back of the pigs are arranged in a carriage (3) on a roof rail (6) or wire (4) and, for instance when the pigs are fed, is driven past the pigs and that the present pigs are compared with a list of all present pigs and that a repeated absence causes alerting of a person in charge so that he or she can investigate that pig.

3. Method according to claim 1 or 2 **characterized in that** before calculating the weight from the area inside the contour of the pig, the head is removed from consideration, by calculating a circle with radius and center decided by the branching point and distance to the background of either the skeleton of the segment or the skeleton of the convex hull.

4. Method according to claim 1 **characterized in that** shape and area features of a "model pig" are compared to the same measurements from pigs segmented by the image processing steps, in order to exclude images with poor results from the study.

5. Method according to claim 1, **characterized in that** based on the correctly processed images obtained for a box of pigs a calculation of mean pig weight for the box is carried out.

6. Method according to claim 1, **characterized in that** an identification chip is injected in the pig and a receiver for identification is arranged in a carriage (3) mounted on a rail (6) or in a handheld device.

7. Method according to claim 1 for the monitoring of pigs **characterized in that** a device, for instance a carriage (3) on a roof, rail (4) or wire (4) for instance when the pigs are fed, is driven past the pigs and that the present pigs are compared with a list of all the present pigs and that a repeated absence causes the device to alert a person in charge so that he or she can investigate that pig.

8. Device for estimation of the weight of pigs based on top views of the pigs, **characterized in** containing, a camera (1) and two illuminating devices or lamps (2) located on each side of the camera spaced apart a width generally corresponding to the width of the pigs, an edge detector, means to project lines longitudinal and/or transverse in relation to the length axle of the pig and a computer being provided with a program establishing the contour of the pig and the roundness of it.

9. Device according to claim 8, **characterized in that** the camera (1) and the illumination devices or lamps (2) are arranged in a carriage (3) on rails (6) or wire (4) above the eating positions of the pigs.

10. Device according to claim 8, **characterized in that** a color filter is used in front of the camera (1) when taking the image of the lines.

11. Device according to claim 8, **characterized in that** the lines are green.

12. Device according to claim 8, **characterized in that** it includes a receiver for identification signals from a chip injected into shoulder or tail of the pigs.

13. Device according to claim 8, **characterized in that** it includes means for receiving temperature indicating signals from a chip injected into the pig.

## Patentansprüche

1. Verfahren zum Bewerten des Zustandes von Schweinen, bei dem das Schweinegewicht geschätzt wird, indem ein Bild einer Kamera (1) von oberhalb des Schweines verarbeitet wird, **dadurch gekennzeichnet, dass** die Schweine zum Zeitpunkt der von der Kamera (1) aufgenommenen Bilder identifiziert werden, dass zwei Ausleuchteinrichtungen oder Lampen (2) auf jeder Seite der Kamera beabstandet mit einer Breite angeordnet sind, die im wesentlichen der Breite der Schweine entspricht, dass die Bildbearbeitungseinrichtung eine Randerkennung unter Einsatz der Ermittlung der Kontur des Schweines umfasst, in Längs- und/oder Querrichtung verlaufende Lichtlinien auf den Rücken des Schweines projiziert werden, dessen Gewicht zu bestimmen ist, und ein zugeordnetes Bild von der Kamera aufgenommen wird und dazu verwendet wird, horizontale Konturen des Schweines oder eines Teils nur dort zu ermitteln, wo die Randerkennung ungewiss oder unmöglich ist, und dass ein Bild von den in Läng- oder in Querrichtung verlaufenden Lichtlinien von der Kamera aufgenommen wird und zur Ermittlung der Rundheit des Schweinerückens eingesetzt wird, welche ihrerseits ein Maß dafür ist, wie fett das Schwein ist.

2. Verfahren nach Anspruch 1, **dadurch gekennzeichnet, dass** die Kamera (1) und die Ausleuchteinrichtungen oder Lampen (2) und die Lasereinrichtung oder andere Ausleuchteinrichtungen, welche Linien quer und/oder längs des Rückens der Schweine projizieren, auf einem Schlitten (3) an einer Deckenschiene (6) oder Seil (4) angeordnet sind, wenn die Schweine beispielsweise gefüttert werden und der Schlitten über die Schweine hinweg bewegt wird, und dass die vorderen Schweine mit allen anderen Schweinen verglichen werden, so dass ein wiederholtes Fehlen eine Bedienungsperson warnt und diese das Schwein untersuchen kann.

3. Verfahren nach Anspruch 1 oder 2, **dadurch gekennzeichnet, dass** vor Ermittlung des Gewichts von dem Bereich im Inneren der Kontur des Schweines der Kopf von der Ermittlung ausgenommen wird, indem mit einem Mittelpunkt durch ein Verzweigungspunkt und einem Abstand zu dem Hintergrund entweder des Skeletts des Segments oder des Skeletts des konvexen Rumpfes bestimmt wird.

4. Verfahren nach Anspruch 1, **dadurch gekennzeichnet, dass** die Form und die Flächen der Einzelheiten eines "Modellschweines" mit den Messergebnissen von den Schweinen verglichen werden, die durch die Bildbearbeitungsschritte segmentiert sind, um Bilder von für die Studie ungenügenden Ergebnissen auszunehmen.

5. Verfahren nach Anspruch 1, **dadurch gekennzeichnet, dass** basierend auf den direkt verarbeiteten Bildern, die man von einem Schweinestall erhält, eine Ermittlung eines mittleren Schweinegewichts, bezogen auf den Stall, ausgeführt wird.

6. Verfahren nach Anspruch 1, **dadurch gekennzeichnet, dass** ein Identifizierungschip in das Schwein eingeschossen wird und ein Empfänger für die Identifikation in einem Schlitten (3) angeordnet ist, welcher auf einer Schiene (6) montiert ist oder in einer handgehaltenen Einrichtung angeordnet ist.

7. Verfahren nach Anspruch 1 zur Überwachung von Schweinen, **dadurch gekennzeichnet, dass** eine Vorrichtung, beispielsweise ein Schlitten (3) an einer Decke, eine Schiene (4) oder einem Seil (4) beispielsweise beim Füttern der Schweine über diese hinweg bewegt wird, und dass die vorhandenen Schweine mit einer Liste von allen vorhandenen Schweine verglichen werden, und dass ein wiederholtes Fehlen dazu führt, dass die Einrichtung die Bedienungsperson warnt, so dass diese das Schwein untersuchen kann.

8. Vorrichtung zur Abschätzung des Gewichts von Schweinen, basierend auf Draufsichten auf die Schweine, **dadurch gekennzeichnet, dass** deine Kamera (1) und zwei Ausleuchteinrichtungen oder Lampen (2) vorgesehen sind, welche auf der Seite der Kamera im allgemeinen entsprechend der Breite der Schweine beabstandet und ein Randdetektor vorgesehen ist, sowie eine Einrichtung, welche in Längsrichtung und/oder in Querrichtung zur Längsachse des Schweines laufende Lichtlinien projiziert und ein Computer vorgesehen ist, welcher ein Programm hat, welches die Kontur des Schweines und die Rundung desselben ermittelt.

9. Vorrichtung nach Anspruch 8, **dadurch gekennzeichnet, dass** die Kamera (1) und die Ausleuchteinrichtungen (2) oder Lampen (2) in einem Schlitten (3) angeordnet sind, welcher auf Schienen (6) oder einem Seil (4) oberhalb der Nahrungsmittelaufnahmepositionen der Schweine angeordnet sind.

10. Vorrichtung nach Anspruch 8, **dadurch gekennzeichnet, dass** ein Farbfilter auf der Frontseite der Kamera (1) eingesetzt wird, wenn das Bild von den Linien aufgenommen wird.

11. Vorrichtung nach Anspruch 8, **dadurch gekennzeichnet, dass** die Linien grün sind.

12. Vorrichtung nach Anspruch 8, **dadurch gekennzeichnet, dass** sie einen Empfänger für die Identifikationssignale von einem Chip umfasst, welcher in die Schulter oder den Schwanz der Schweine eingeschossen ist.

13. Vorrichtung nach Anspruch 8, **dadurch gekennzeichnet**, das sie eine Einrichtung zur Aufnahme von Temperaturwiedergabesignalen von einem Chip umfasst, der in das Schwein eingeschossen ist.

## Revendications

1. Procédé d'estimation de l'état physique de cochons, dans lequel le poids du cochon est estimé en traitant une image de dispositif de prise de vue (1) de dessus d'un cochon, **caractérisé en ce que** les cochons sont identifiés au moment où leurs images sont prises par le dispositif de prise de vue (1) et **en ce que** deux dispositifs d'illumination ou lampes (2) sont situés de chaque côté du dispositif de prise de vue, espacés d'une largeur correspondant généralement à la largeur des cochons, et **en ce que** le traitement d'image comprend une détection de bord utilisée pour calculer le contour du cochon, des lignes de lumière longitudinales et/ou transversales sont projetées sur le dos du cochon qui doit être pesé et une image correspondante est prise par le dispositif de prise de vue et utilisée pour établir le contour horizontal du cochon ou d'une partie de celui-ci, uniquement là où la détection de bord est incertaine ou impossible, et **en ce qu'**une image des lignes de lumière longitudinales et/ou transversales est prise par le dispositif de prise de vue et utilisée pour établir l'arrondi du dos de cochon, qui est à son tour utilisé comme mesure de combien le cochon est gras.

2. Procédé selon la revendication 1, **caractérisé en ce que** le dispositif de prise de vue (1) et les dispositifs d'illumination ou lampes (2) et un dispositif laser ou un autre dispositif d'illumination destinés à projeter des lignes sur et/ou le long du dos des cochons sont agencés dans un chariot (3) sur un rail (6) ou un câble (4) de toit et, par exemple lorsque les cochons sont nourris, est entraîné au-delà des cochons et **en ce que** les cochons présents sont comparés à une liste de tous les cochons présents et **en ce qu'**une absence répétée provoque l'alerte d'une personne responsable de sorte qu'elle puisse examiner ce cochon.

3. Procédé selon la revendication 1 ou 2, **caractérisé en ce qu'**avant le calcul du poids à partir de l'aire à l'intérieur du contour du cochon, la tête n'est pas prise en compte, en calculant un cercle de rayon et centre choisis par le point de bifurcation et la distance par rapport à l'arrière-plan soit du squelette du segment soit du squelette de l'enveloppe convexe.

4. Procédé selon la revendication 1, **caractérisé en ce que** la forme et les particularités d'aire d'un « cochon modèle » sont comparées aux mêmes mesures à partir de cochons segmentés par les étapes de traitement d'image, afin d'exclure de l'étude les images de résultats insatisfaisants.

5. Procédé selon la revendication 1, **caractérisé en ce que**, sur la base des images traitées correctement obtenues pour un enclos de cochons, un calcul d'un poids de cochon moyen pour l'enclos de cochons est réalisé.

6. Procédé selon la revendication 1, **caractérisé en ce qu'**une puce d'identification est injectée dans le cochon et un récepteur destiné à l'identification est agencé dans un chariot (3) monté sur un rail (6) ou un dispositif à main.

7. Procédé selon la revendication 1, destiné à la surveillance de cochons **caractérisé en ce qu'**un dispositif, par exemple un chariot (3) sur un toit, un rail (6) ou un câble (4) par exemple lorsque les cochons sont nourris, est entraîné au-delà des cochons et **en ce que** les cochons présents sont comparés à une liste de tous les cochons présents et **en ce qu'**une absence répétée amène le dispositif à alerter une personne responsable de sorte qu'elle puisse examiner ce cochon.

8. Dispositif destiné à estimer le poids de cochons sur la base de vues de dessus des cochons, **caractérisé en ce qu'**il contient un dispositif de prise de vue (1) et deux dispositifs d'illumination ou lampes (2) situés de chaque côté du dispositif de prise de vue espacés d'une largeur correspondant généralement à la largeur des cochons, un détecteur de bord, un moyen destiné à projeter des lignes longitudinales et/ou transversales par rapport à l'axe de longueur du cochon et un ordinateur doté d'un programme établissant le contour du cochon et sa rondeur.

9. Dispositif selon la revendication 8, **caractérisé en ce que** le dispositif de prise de vue (1) et les dispositif d'illumination ou lampes (2) sont agencés dans un chariot (3) sur des rails (6) ou un câble (4) au-dessus des positions des cochons lorsqu'ils mangent.

10. Dispositif selon la revendication 8, **caractérisé en ce qu'**un filtre coloré est utilisé devant le dispositif de prise de vue lors de la prise de l'image des lignes.

11. Dispositif selon la revendication 8, **caractérisé en ce que** les lignes sont vertes.

12. Dispositif selon la revendication 8, **caractérisé en ce qu'**il comprend un récepteur destiné à des signaux d'identification en provenance d'une puce injectée dans l'épaule ou la queue des cochons.

13. Dispositif selon la revendication 8, **caractérisé en ce qu'**il comprend un moyen destiné à recevoir des signaux d'indication de température en provenance d'une puce injectée dans le cochon.
